Europäisches Patentamt

European Patent Office

Office européen des brevets

(11) Publication number: **0 363 006**
**A2**

# EUROPEAN PATENT APPLICATION

(21) Application number: **89308871.6**

(22) Date of filing: **01.09.89**

(51) Int. Cl.5: **C08J 3/24 , C08L 83/07 , C08K 9/10 , C08J 3/12**

(30) Priority: **02.09.88 US 239904**

(43) Date of publication of application:
**11.04.90 Bulletin 90/15**

(84) Designated Contracting States:
**BE DE FR GB IT NL**

(71) Applicant: **DOW CORNING CORPORATION**
**P.O. Box 1767**
**Midland Michigan 48686-0994(US)**

(72) Inventor: **Juen, Donnie Ray**
**2502 Peterson Drive**
**Sanford Michigan(US)**

(74) Representative: **Lewin, John Harvey et al**
**ELKINGTON AND FIFE Beacon House 113 Kingsway**
**London WC2B 6PP(GB)**

(54) **A method for curing storage stable organosiloxane compositions containing microencapsulated ingredients.**

(57) One part, storage stable organosiloxane compositions containing a reactant and/or curing catalyst that is encapsulated within a layer of a thermoplastic organic polymer are cured at temperatures below the melting point of the thermoplastic organic polymer by contacting the composition with a solvent for the organic polymer. The encapsulated reactants and/or catalysts can be prepared using known techniques.

EP 0 363 006 A2

# A METHOD FOR CURING STABLE ORGANOSILOXANE COMPOSITIONS CONTAINING MICROEN-CAPSULATED INGREDIENTS

Certain polyorganosiloxane compositions cure by a platinum catalyzed hydrosilation reaction or by the reaction of a hydroxyl-containing polyorganosiloxane with an organohydrogensiloxane in the presence of a platinum- or tin-containing catalyst. The advantages of these. compositions relative to moisture curable polyorganosiloxane compositions is their rapid curing rate, particularly at temperatures above about 70°C., and their ability to cure in thick sections.

Compositions that cure by a hydrosilation reaction typically contain a polydiorganosiloxane with at least two ethylenically unsaturated hydrocarbon radicals per molecule, an organohydrogensiloxane containing at least two silicon-bonded hydrogen atoms per molecule in an amount sufficient to achieve curing of the composition and a platinum-containing catalyst in an amount sufficient to promote curing of the composition. Fillers and other additives may be present for the purpose of modifying physical and/or chemical properties of the composition either prior to or following curing.

The aforementioned platinum- and tin-catalyzed organosiloxane compositions begin to cure even at ambient temperature once the reactants and catalyst are combined. Even if the composition contains many of the known catalyst inhibitors, it cannot be stored as a one-part composition for more than a few hours. The organohydrogensiloxane reactant and the catalyst are, therefore, packaged in separate containers and are not combined until it is desired to cure the composition.

One of the alternatives proposed in the prior art to supplying platinum- and tin-catalyzed organosiloxane compositions described in the preceding paragraphs as two-package materials is to encapsulate either the catalyst or the organohydrogensiloxane within a matrix of a material that is solid under the conditions encountered during storage of the curable composition, yet allows the encapsulated reactant or catalyst to escape and mix with the other ingredients when it is desired to cure the composition.

Curable organosiloxane compositions containing a microencapsulated platinum-containing catalysts are disclosed in allowed copending United States Patent Application Serial No. 75,177, filed on July 20, 1987 in the name of a group of inventors including the present one. In accordance with the teaching of this application, the compositions are cured by heating them to a temperature sufficiently high to melt the thermoplastic organic polymer that encapsulates the catalyst, thereby liberating the catalyst and allowing it to initiate curing of the composition. While this method for curing the polymer may be appropriate under some conditions, in other instances it may be desireable to cure the composition at temperatures below the melting point of the polymer used to encapsulate the catalyst. The ovens or other equipment used to generate the heat required to melt the encapsulating polymer and the energy needed to generate this heat substantially increase the cost of the curing process. In addition, these heating means and source of energy to operate them may not be available at the location where the compositions are to be cured.

The present inventor undertook an investigation with the objective of devising a method for curing one-part organosiloxane compositions wherein at least one of the reactants and/or catalysts required to cure the composition has been microencapsulated. The compositions should be capable of being stored up to one year or longer under ambient conditions and rapidly cured in a few minutes at temperatures below the melting point of the encapsulating polymer.

This objective wad achieved by blending the curable composition with a solvent for·the thermoplastic organic polymer(s) present in the microcapsules.

One part, storage stable organosiloxane compositions containing a reactant and/or curing catalyst that is encapsulated within a layer of a thermoplastic organic polymer are cured at temperatures below the melting point of the thermoplastic organic polymer by contacting the compositions with a solvent for the organic polymer. Preferred compositions cure by means of a platinum-catalyzed hydrosilation reaction or a platinum- or tin-catalyzed reaction between a hydroxyl-containing polyorganosiloxane and an organohydrogensiloxane. The encapsulated reactants and/or catalysts can be prepared using known techniques.

This invention provides an improved method for curing one-part, storage stable organosiloxane compositions comprising

(A) a curable polyorganosiloxane containing at least two alkenyl radicals or silicon-bonded hydroxyl groups per molecule;

(B) a curing agent in an amount sufficient to cure said polyorganosiloxane, and

(C) a catalyst to in an amount sufficient to promote curing of said composition,
where at least one ingredient selected from said curing agent (B) and said catalyst (C) is encapsulated as microcapsules within a thermoplastic organic polymer.

The improvement comprises contacting said composition with an amount of a solvent for said thermoplastic organic polymer sufficient to liberate the encapsulated ingredient(s) from said microcapsules and thereby initiate curing of the composition at temperatures below the melting or softening point of said thermoplastic organic polymer.

In preferred embodiments of the present method, the curing agent is an organohydrogensiloxane containing at least two silicon bonded hydrogen atoms per molecule, the sum of the average number of ethylenically unsaturated hydrocarbon radicals or hydroxyl groups per molecule of said polyorganosiloxane, referred to hereinafter as (A), the average number of silicon bonded hydrogen atoms per molecule of said organohydrogensiloxane (B) is greater than 4, and the curing catalyst is a platinum-containing hydrosilation catalyst when ingredient A contains ethylenically unsaturated hydrocarbon radicals or hydroxyl groups or a tin compound when ingredient A contains hydroxyl groups.

One-part organosiloxane compositions that are cured in accordance with the present method contain at least one of the curing agent(s) and/or catalyst(s) required to promote curing of the composition in the form of microcapsules. These microencapsulated ingredients are present as finely divided particles or droplets that are completely enveloped within one or more layers of a thermoplastic organic polymer. The average diameter of the microcapsules is less than 500 microns and the thermoplastic organic polymer constitutes at least 50 percent of the weight of said microcapsules.

The microencapsulated ingredient can be distributed throughout the volume of the microcapsule or can be concentrated in one or more "core" areas.

A preferred type of microcapsule is essentially spherical in contour with a diameter of less than 50 microns. This type of microcapsule can be readily incorporated into curable organosiloxane compositions. Depending upon the method used to prepare the microcapsules, they can deviate from this contour at one or more locations around their perimeter, particularly if the encapsulated material is a solid particle such as quartz that was treated with the liquid or solubilized material to be encapsulated.

Because the microencapsulated ingredient(s) are effectively isolated from the other ingredients of the composition, the compositions are stable for extended periods of time, typically several months or longer, under ambient conditions.

In accordance with the present method, these storage-stable compositions can be rapidly cured at temperatures below the melting point of the encapsulating polymer by combining the compositions with a solvent for the encapsulating polymer.

Solvents for each suitable class of encapsulating polymer are known in the art and representative ones are disclosed in the accompanying examples. The solvents should be relatively non-volatile to avoid excessive evaporation before the solvent has had an opportunity to contact and dissolve the encapsulating polymer.

A publication entitled "Polymer Handbook" by J. Brandrup and E. H. Immergut contains listings of solvents for many types of thermoplastic organic polymers suitable as encapsulants in accordance with the present method.

Polymerized esters of acrylic and/or methacrylic acids, a preferred class of encapsulating polymers, are soluble in ketones containing from 3 to about 8 carbon atoms, aromatic hydrocarbons such as toluene and xylene, liquid chlorinated hydrocarbons, liquid esters of carboxylic acids and alcohols, each of which contain from 1 to about 4 carbon atoms, mono- and diethers derived form methanol or ethanol and diols such as ethylene and propylene glycols, and cyclic ethers such as tetrahydrofuran. The thermoplastic organic polymer portion of the microcapsules are insoluble in and impervious to all ingredients of the curable composition. If the organic polymer in contact with the encapsulated ingredient is, in turn, encapsulated within a shell formed from a second organic polymer, the polymers are preferably different and each must meet all of these requirements.

Polymers useful as encapsulants in accordance with the present method include but are not limited to addition type polymers such as polyethylene, polystyrene, polyvinyl chloride, polyvinylidene chloride, copolymers of vinyl chloride and vinylidene chloride, polyacrylates such as polymethyl methacrylate, polyacrylonitrile and copolymers of acrylonitrile with butadiene and/or styrene. Suitable condensation type polymers include but are not limited to polyamides and polyesters. Cellulose esters such as cellulose acetate and mixed esters such as cellulose acetate butyrate can also be used.

The thermoplastic organic polymer(s) constitutes at least 50 percent by weight of the microcapsules. The microcapsules, in turn, include the encapsulating polymer (or polymers in the case of the two-layer capsules described hereinafter) and at least one ingredient of the curable composition together with any liquids used to dissolve and/or dilute the ingredient. Preferably, the weight of the thermoplastic polymers constitutes at least 70 percent by weight of the microcapsule.

It is not feasible to incorporate all of the materials to be encapsulated and any associated liquid materials using conventional microencapsulation methods when the encapsulating polymers constitute less than 50 percent by weight of the microcapsules. The excess ingredients typically collect on the surface of the capsules and often results in premature curing of organosiloxane compositions containing the encapsulated-ingredients. Even if the excess ingredient is removed by washing with a suitable solvent for the ingredient, the shell of the microcapsule may not be of sufficient thickness to prevent diffusion of ingredients from the interior to the surface of the microcapsule.

The thermoplastic organic polymer portion of the microcapsules can be deposited using any of the chemical, physico-chemical or physical methods described in the aforementioned prior art and summarized in the aforementioned copending application Serial No. 75,177.

One of the chemical methods for preparing a microencapsulated material involves an in-situ polymerization of at least one monomer on the surface of a finely divided catalyst in the form of solid particles or droplets. The monomer can be an ethylenically unsaturated organic monomer such as ethylene, styrene, vinyl chloride, vinylidene chloride or an ester of acrylic or methacrylic acid such as methyl methacrylate. Mixtures containing two or more of these ethylenically unsaturated monomers can be used, depending upon the physical and chemical properties desired for the encapsulant. Preferred monomer mixtures include mixtures of styrene and acrylonitrile and mixtures of vinylidine chloride with other ethylenically unsaturated monomers.

Alternatively, the polymerization reaction used to prepare the encapsulating polymer can involve a condensation reaction between two or more monomers or a single cyclic monomer such as a lactone or lactam. An example of such a condensation polymerization is the interfacial reaction between sebacoyl chloride and hexamethylene diamine to form a polyamide.

At least one of the condensable monomers together with the particles or droplets to be encapsulated are emulsified in an aqueous medium, which may also contain a catalyst for the polymerization. Depending upon the type of monomer(s) selected, formation of the encapsulating polymer is effected by heating, exposure to ultraviolet or other type of radiation or allowing the reactants of a condensation polymerization to contact one another in the presence of an appropriate catalyst.

A physico-chemical method for preparing the present microencapsulated ingredients involves precipitation of a pre-formed solubilized encapsulating polymer from an emulsion that also contains the ingredient as part of the dispersed phase. This method typically comprises the following series of steps:

A. emulsifying or dispersing in the continuous phase liquid 1) a finely divided form of the ingredient as particles or droplets and 2) a solution of the encapsulant in a liquid that is immiscible with the continuous phase, the weight of encapsulant being at least equal to the weight of the ingredient,

B. evaporating an amount of encapsulant solvent sufficient to precipitate the encapsulant as a coating around substantially all the particles or droplets of ingredient, and

C. solidifying and recovering the resultant microcapsules.

To ensure the substantial absence of encapsulated ingredient on the outer surface of microcapsules prepared using any of the aforementioned methods, the microcapsules are preferably washed with a solvent for the ingredient that will not dissolve the encapsulating polymer(s). When the ingredient is a catalyst, it has been found that even trace amounts on the surface of the microcapsule can result in premature curing of the present compositions.

If the ingredient is a reaction product of hexachloroplatinic acid with an ethylenically unsaturated liquid organosilicon compound such as a sym-tetraalkyldivinyldisiloxane, a preferred hydrosilation catalyst, the liquid used to wash the microcapsules is preferably a liquid cyclic or linear polydialkylsiloxane that is a solvent for the reaction product but not the encapsulating polymer(s). Most preferably, the alkyl radicals on both the reaction product and the washing liquid are methyl.

If the microcapsule contains two layers of different organic polymers, each of these layers is formed independently using any of the foregoing chemical, physico-chemical or mechanical methods.

Any of the known organosiloxane compositions that cure in absence of radiation can be cured in accordance with the present method. This includes but is not limited to the following classes of compositions:

1. Compositions that cure in the presence of atmospheric moisture by the reaction of a polyorganosiloxane containing at least two silicon-bonded hydroxyl groups per molecule with a curing agent that is a silane or organosiloxane containing at least to silicon-bonded hydrolyzable groups per molecule. Typical hydrolyzable groups include but are not limited to acetoxy, alkoxy, ketoximo, amino and amido. These compositions usually include a filler and a curing accelerator such as compounds of tin and titanium. Moisture curable organosiloxane compositions are sufficiently well known in the art that a detailed description of them in this specification is not necessary. In accordance with the present method, the curing agent and/or the curing accelerator is encapsulated within at least one layer of a thermoplastic organic polymer. When it is desired to cure the composition, it is contacted with a solvent for the encapsulating polymer and exposed to moisture to achieve curing.

2. Compositions that cure by the reaction of an organohydrogensiloxane containing at least three silicon-bonded hydrogen atoms per molecule with a polyorganosiloxane containing two alkylene radicals or silicon-bonded hydroxyl groups per molecule. These reactions do not require the presence of atmospheric moisture and are catalyzed by metals from the platinum group of the Periodic Table and compounds of these metals. The reaction of organohydrogensiloxanes with polyorganosiloxanes containing silicon-bonded hydroxyl groups can be catalyzed by tin compounds. These compositions typically cure in a matter of minutes or a few hours at most, even under ambient conditions. Because moisture is not required, there is no limitation on thickness. Curable compositions of this type, therefore, are preferred for use in accordance with the present method. The ingredients of these preferred compositions will now be described in detail.

In addition to a platinum- or tin-containing catalyst, the preferred curable organosiloxane compositions comprise a polyorganosiloxane, referred to hereinafter as ingredient A, containing at least two alkenyl radicals or silicon-bonded hydroxyl groups per molecule and a polyorganohydrogensiloxane containing at least two silicon-bonded hydrogen atoms per molecule referred to hereinafter as ingredient B.

To ensure adequate cross linking and an acceptable level of physical properties the sum of the average number of ethylenically unsaturated hydrocarbon radicals or hydroxyl groups per molecule of ingredient A the average number of silicon-bonded hydrogen atoms per molecule of ingredient B is greater than 4.

Ingredient A is a liquid or a high viscosity gum and contains at least two silicon-bonded hydroxyl groups or alkenyl radicals per molecule. The silicon-bonded hydrocarbon radicals present in ingredient A can contain from 1 up to 20 or more carbon atoms. Preferably, these radicals are lower alkyl, phenyl or a perfluoroalkylethyl radical such as 3,3,3-trifluoropropyl, this preference being based on the availability of the intermediates used to prepare ingredient A. Most preferably, at least a portion of the repeating units of ingredient A contain silicon bonded methyl radicals and the ethylenically unsaturated hydrocarbon present in this ingredient is vinyl or allyl.

The alkenyl radicals or hydroxyl groups of ingredient A can be present anywhere in the molecule, however, these reactive groups are preferably present at the terminal positions of the molecule.

If the preferred curable composition is a liquid or paste, the viscosity of ingredient A is preferably from 1 to 500 Pa·s. Alternatively, this ingredient can be a semi-solid material, known in the art as a gum, exhibiting a viscosity of up to 1000 Pa·s or greater at 25°C.

Curable compositions containing gum-type polydiorganosiloxanes are typically prepared by blending the ingredients under high shear using a two- or three-roll rubber mill or in a dough type mixer. Surprisingly, it has been found that the microcapsules do not rupture or collapse under the conditions used to process high consistency organosiloxane compositions. The catalysts can, therefore, be incorporated into this type of curable composition.

In accordance with one embodiment of the present method, ingredient A contains at least two alkenyl radicals per molecule and is cured by the reaction between these alkenyl radicals and the silicon-bonded hydrogen atoms of the curing agent (ingredient B) that is catalyzed by platinum or a platinum compound as described hereinbefore. Alternatively, curing reactions involving hydroxyl groups present on ingredient A can be catalyzed using one of these platinum compounds or one of the aforementioned tin compounds. In a typical instance, at least one polydiorganosiloxane containing two ethylenically unsaturated hydrocarbon radicals or hydroxyl groups reacts with a relatively low molecular weight, liquid organosiloxane curing agent containing an average of at least three silicon-bonded hydrogen atoms per molecule.

Ingredient B is an organohydrogensiloxane containing an average of two or more silicon-bonded hydrogen atoms per molecule. It can contain from as few as four silicon atoms per molecule up to an average of 20 or more and exhibit a viscosity of up to 10 Pa·s or higher at 25°C. Ingredient B contains repeating units of the formulae $HSiO_{1.5}$, $R'HSiO$ and/or $R'_2HSiO_{0.5}$. The molecules of this ingredient may also include one or more monoorganosiloxane, diorganosiloxane, triorganosiloxy and $SiO_{4/2}$ units that do not contain silicon bonded hydrogen atoms. In these formulae, $R'$ is a monovalent hydrocarbon radical as defined hereinabove for the R radical of ingredient A.

Alternatively, ingredient B can be a cyclic compound containing diorganosiloxane and organohydrogensiloxane units or a compound of the formula $Si(OSiR'_2H)_4$.

Most preferably, $R'$ is methyl and ingredient B is a linear trimethylsiloxy terminated polymethylhydrogensiloxane or a dimethylsiloxane/methylhydrogensiloxane copolymer containing an average of from 10 to about 50 repeating units per molecule of which from 3 to 5 are methylhydrogensiloxane.

The molecular weights of ingredients A and B together with the number and distribution of the silicon-bonded hydrogen atoms and alkenyl radicals or hydroxyl groups within these ingredients will determine the location of crosslinks in the cured elastomer. The concentration of crosslinks per unit volume is often referred to as the "crosslink density" and determines certain physical properties of the cured elastomer, particularly hardness, modulus tensile strength and elongation. The particular combination of polydiorganosiloxane(s) and curing agent(s) yielding the desired combination of physical properties can readily be determined by routine experimentation with a knowledge of this invention.

The molar ratio of silicon-bonded hydrogen atoms to the hydroxyl groups or alkenyl radicals present in the curable compositions of this invention is a major factor in determining the properties of the cured elastomer. Because of the difficulty often experienced in achieving a complete reaction between all of the silicon-bonded hydrogen atoms and all of the vinyl or other ethylenically unsaturated hydrocarbon radicals present in the reaction mixture, it is desirable to have an stoichiometric excess of one of these species in a curable composition. A ratio of from 1.0 to 1.6 silicon-bonded hydrogen atoms per vinyl or other ethylenically unsaturated hydrocarbon radical has been found to yield optimum combinations of properties.

The preferred ratio for a given composition will be determined at least in part by the average molecular weight of ingredient A and the type of curing agent.

The class of tin catalysts useful for curing preferred compositions in accordance with the present method encompasses all of the compounds containing divalent or tetravalent tin that are effective catalysts for the reaction between silicon-bonded hydrogen atoms and silicon-bonded hydroxyl groups. Representative tin catalysts include but are not limited to divalent tin carboxylates such as stannous octoate and diorganotin compounds wherein tin is in the tetravalent state, such as dibutyltin dilaurate.

Useful platinum catalysts include metals of the platinum group of the Periodic Table and compounds of these metals that are capable of catalyzing the reaction between silicon-bonded hydrogen atoms and either an alkenyl radical such as vinyl or a silicon-bonded hydroxyl group. Suitable catalysts include finely divided platinum or other platinum group metal deposited on carbon black and many compounds of platinum group metals. Reaction products and complexes of inorganic compounds of platinum, particularly halogen compounds, with organosilicon compounds are preferred because of their compatibility with the reactants in the curable organosiloxane compositions of this invention.

In accordance with the invention claimed in the aforementioned copending application Serial No. 75,177, any of the known platinum-containing hydrosilation catalysts described in the prior art can be microencapsulated and incorporated into organosiloxane compositions curable by a hydrosilation reaction. This application is incorporated into this specification by reference as a teaching of the methods that can be used to prepare the microencapsulated platinum- and tin-containing catalysts that can be used to cure organosiloxane compositions in accordance with the present method.

The encapsulated ingredient is preferably a platinum- or tin-containing catalyst composition that can be a liquid or solid at ambient temperature. Solid catalysts can be encapsulated in this form or dissolved in a solvent that will not dissolve the encapsulating polymer(s). To increase the density of the microcapsule, the catalyst composition can be prepared by treating a finely divided solid such as silica or quartz with one of the aforementioned platinum-containing hydrosilation catalysts in liquid or solubilized form.

The consistency of the present compositions can vary from a flowable liquid to a semi-solid paste to a high consistency gum that will flow only under high shear. In addition to the aforementioned ingredients, the compositions can contain other additives including but not limited to reinforcing and non-reinforcing fillers, treating agents for these fillers, pigments, processing aids, stabilizers. and flame retardants.

In accordance with the present method, the compositions are cured by blending them with at least one percent by weight of a solvent for the organic polymer portion of the microencapsulated ingredient. The present inventor discovered that the rate at which the composition cures at a given temperature can be increased by increasing the amount of solvent, up to a level of about 15 percent by weight. Beyond this limit, the composition may be too dilute to be useful for the intended end use. The solvent and curable composition can be blended using any of the known methods, including stirring and the use of devices such as stirrers, blenders and two- or three-roll mills.

If the composition is intended to be injection molded or extruded, the solvent can be introduced into the injection molding device or extruder as a separate stream and blended with the curable composition just prior to fabrication. Compositions that are applied by spraying can be blended with the solvent just prior to emerging from the nozzle of the spraying device.

The following examples describe preferred embodiments of the one-part, storage stable curable organosiloxane compositions of this invention and should not be interpreted as limiting the scope of the invention defined in the accompanying claims. Unless otherwise specified, all parts and percentages are by weight and all viscosities were measured at 25°C.

Example 1

This example describes the preparation of a preferred microencapsulated platinum group metal compound by precipitating a coating of a methyl methacrylate/butyl methacrylate copolymer around a finely divided form of a liquid platinum compound.

A mixture (I) of the platinum compound and encapsulating polymer was prepared by blending to homogeneity 1) 39.3 g. of a methyl methacrylate/butyl methacrylate copolymer available as Elvacite(R) 2013 from E. I. duPont de Nemours and Co., 2) 3.57 g. of a liquid platinum compound prepared by reacting hexachloroplatinic acid with symtetramethyldivinyldisiloxane and diluting the reaction product with a liquid dimethylvinylsiloxy terminated polydimethylsiloxane to achieve a platinum content of 4.31 percent, and 3) 360 cc. of methylene chloride. The preparation of the platinum compound is described in United States Patent No. 3,419,593.

The resultant mixture I was gradually added to a reactor equipped with a mechanically operated stirrer and nitrogen inlet and mechanically driven stirring blade. The reactor had previously been charged with a 560 cc. of a 4.1 weight percent aqueous solution of polyvinyl alcohol (available as Vinol 205 from Air Products and Chemicals) and a few drops of n-octanol as a foam suppressant. The stirrer was operated at a rate of 400 r.p.m. during the addition of mixture I. Following completion of the addition, the size of the emulsified particles was measured using an optical microscope and found to be within the range from 1 to 120 microns.

A stream of argon was then passed above the emulsion for 1-1/2 days to evaporate the methylene chloride. At this time, the microcapsules were spherical and measured from about 1 to about 10 microns in diameter. The dispersion was then centrifuged, the liquid decanted off and the microcapsules washed three times with water.

The microcapsules were recovered from the third washing using a Niro portable spray drier. The temperature of the air entering the chamber of the spray drier was maintained within the range of from 190-200°C. and the rate at which the water suspension of microcapsules was pumped to the atomizer was adjusted to maintain the temperature of the air exiting from the spray drier at 100°C.

The atomizer was rotated at a speed of 40,000 r.p.m.

The weight of dried microcapsules obtained was 74.4 grams, equivalent to an 87% yield based on starting materials. The microcapsules contained 0.36% platinum, equivalent to a 100% yield, based on the initial weight of platinum compound.

The ability of the resultant microencapsulated platinum group metal compound prepared in accordance with the present method to function as a catalyst in a storage stable one-part organosiloxane composition curable by a platinum-catalyzed hydrosilation reaction was evaluated using a composition (Composition A) obtained by blending the following ingredients to homogeneity:
50 parts of a dimethylvinylsiloxy endblocked polydimethylsiloxane having a viscosity of about 0.4 Pa·s at 25°C.
50 parts of a finely divided quartz having an average particle size of 5 microns.
2.5 parts of a trimethylsiloxy endblocked organosiloxane copolymer having an average of five methylhydrogensiloxane units and three dimethylsiloxane units per molecule and containing from 0.7 to 0.8 weight percent of silicon-bonded hydrogen atoms; and
0.19 part of the microencapsulated platinum compound prepared as described in this example, equivalent to 6.6 ppm of platinum, based on the combined weight of polydiorganosiloxane and organosiloxane copolymer.

Composition A did not exhibit a significant increase in viscosity after being stored for six months at room temperature. One gram of the composition was blended with 0.03 g. of acetone. The composition cured in 13 minutes at a temperature of 21°C.

For purposes of comparison, the curable composition described in the preceding portion of this example was prepared. When the composition was blended with pentane in place of the acetone no curing was evident after 20 minutes.

Example 2

This example demonstrates the applicability of the present method to sprayable organosiloxane compositions.

A curable composition was prepared by blending the following ingredients to homogeneity:
100 parts of a dimethylvinylsiloxy-terminated copolymer containing an average of 157 dimethylsiloxane units and 2.9 methylvinylsiloxane units per molecule,
2.4 parts of a trimethylsiloxy terminated polymethylhydrogensiloxane containing about 1.6 weight percent of silicon-bonded hydrogen,

1.6 parts of a trimethylsiloxy endblocked polydiorganosiloxane having an average of five methylhydrogensiloxane units and three dimethylsiloxane units per molecule and containing from 0.7 to 0.8 weight percent of silicon-bonded hydrogen atoms, and

3.68 parts of a microencapsulated platinum catalyst prepared as described in example 1, equivalent to a platinum content in the curable composition of 125 ppm.

The resultant composition was applied to the surface of an aluminum panel measuring 20 by 8 cm. using a Preval(R) portable cartridge type sprayer. The coated surface was then sprayed with enough acetone to wet the surface and run off. The panel allowed to remain under ambient conditions for about 15 minutes, at which time the coating had begun to cure. When the panel was examined about 16 hours later, curing was complete.

In a second experiment, the curable composition described in the first part of this example was diluted with two percent by weight of acetone and the resultant composition was sprayed onto an aluminum panel. The coating began to harden after being exposed to ambient conditions for about 15 minutes and curing was complete after 30 minutes.

## Example 3

This example demonstrates the applicability of the present method to compositions containing a microencapsulated tin catalyst.

The encapsulated catalyst was prepared by gradual addition of a solution containing 27.6 g. of the methyl methacrylate/butyl methacrylate copolymer described in Example 1 of this specification, 2.36 g. of dibutyltin diacetate and 250 cc. of methylene chloride to a reactor containing a stirred 4.1% aqueous solution of polyvinyl alcohol that included a few drops of n-octanol as a foam control agent. Following completion of the addition, examination of the resultant emulsion under a light microscope revealed an average particle size of from 10 to 125 microns. The methylene chloride was evaporated by passing a stream of argon through the reactor. The particle size of the precipitated microcapsules was between 1 and 20 microns.

The microcapsules were washed three times with water to ensure removal of the polyvinyl alcohol, washed once with methanol and allowed to air dry, followed by three washings with cyclic dimethylsiloxanes to remove any tin compound adhering to the outer surface of the microcapsules. The dried microcapsules were then passed through a screen to remove agglomerates greater than 40 microns in diameter. The microcapsules passing through the screen were collected and used to prepare a storage stable curable organosiloxane sealant composition.

The storage stable, curable organosilicon composition was prepared by blending the following ingredients to homogeniety.

49.25 parts of a polydimethylsiloxane exhibiting a viscosity of 14 Pa·s where about 85 percent of the terminal groups contain a silicon-bonded hydroxyl group and the remainder are trimethylsiloxy,

1.5 parts of a hydroxyl endblocked polydimethylsiloxane fluid having a viscosity of about 0.04 Pa.s at 25° C. and containing about 4 weight percent of silicon-bonded hydroxyl groups,

49.25 parts of a finely divided calcium carbonate,

2 parts of n-propyl orthosilicate, and

6.65 parts of the microencapsulated di-n-butyltin diacetate prepared as described in the first part of this example (equivalent to 0.52 part of the tin compound).

For comparative purposes, the first four ingredients of this composition were blended with 0.58 part of di-n-butyltin diacetate that had not been microencapsulated.

Samples of approximately one gram were taken from each of the two compositions, placed in aluminum weighing dishes and exposed to ambient conditions of temperature and humidity. The control composition containing the non-encapsulated catalyst cured within two hours. The sample containing the microencapsulated catalyst was not cured after three days. A one gram sample of the composition containing the microencapsulated catalyst was blended with 4% by weight of acetone. The sample cured within one hour under ambient conditions.

A sample of each composition was heated at 200° C. for 5 minutes. The sample containing the non-encapsulated catalyst cured only on the surface and was not completely cured underneath the surface. The sample containing the encapsulated catalyst was only partially cured throughout and did not cure completely after 3 days under ambient conditions.

## Claims

1. In a method for curing one-part, storage stable organosiloxane compositions comprising

(A) a curable polyorganosiloxane containing at least two alkenyl radicals or silicon-bonded hydroxyl groups per molecule;

(B) a curing agent in an amount sufficient to cure said polyorganosiloxane, and

(C) a catalyst or accelerator in an amount sufficient to promote curing of said polyorganosiloxane, where at least one ingredient selected from said curing agent (B) and said catalyst (C) is encapsulated as microcapsules within at least one layer of a thermoplastic organic polymer, the improvement comprising contacting said composition with an amount of a solvent for said thermoplastic organic polymer sufficient to liberate the encapsulated ingredient(s) from said microcapsules and thereby initiate curing of the composition at a temperature below the melting or softening point of said thermoplastic organic polymer.